# EUROPEAN PATENT SPECIFICATION

(11) **EP 1 621 276 B1**
(45) Date of publication and mention of the grant of the patent: **02.01.2013**
(21) Application number: 05023455.8
(22) Date of filing: 10.09.2003
(51) Int. Cl.: B23D 45/02, B23D 47/00, B23D 45/04

(54) **Miter saw arrangement for increased cutting capacity**
Gehrungssägeanordnung mit erhöhter Trennkapazität
Agencement d'une scie à onglet avec une capacité de coupe augmentée

(30) Priority: 17.09.2002 US 245439
(43) Date of publication of application: 01.02.2006
(62) Divisional of application: 03020390.5
(73) Proprietor: Black & Decker Inc., Newark, Delaware 19711 (US)
(72) Inventor: Wattenbach, Brian P., Menomonee Falls, Wisconsin 53051 (US)
(74) Representative: Bell, Ian Stephen

(56) References cited:
- EP-A- 0 407 204
- DE-U1- 20 200 745
- US-A- 5 265 511
- US-A- 5 839 339

## Description

This invention relates generally to a miter saw according to the preamble of claim 1. Such a saw is known from EP 0 407 204 A2.

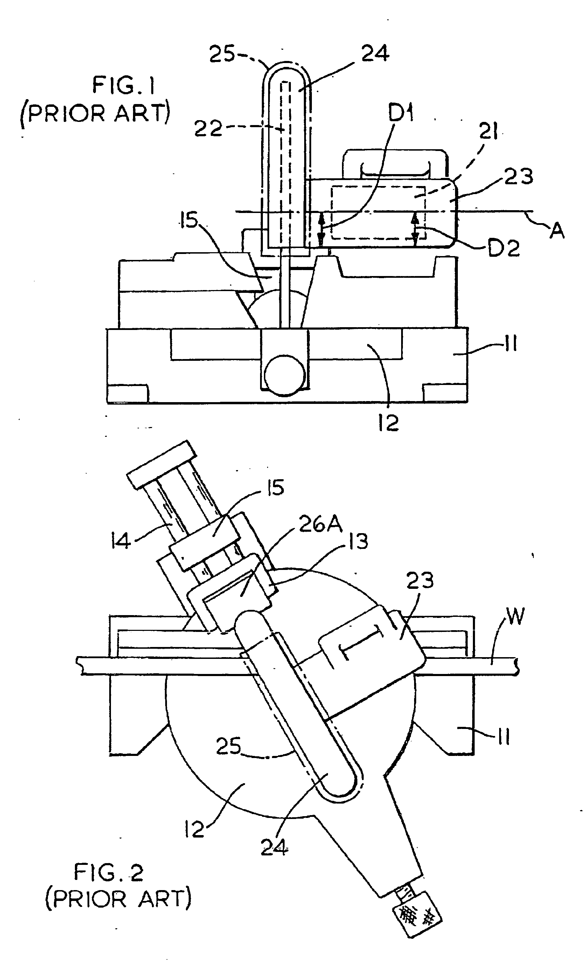

Slide miter saws are well known in the art as they provide extended cutting range over non-sliding miter saws. Referring to FIG. 1, non-sliding and slide miter saws both have a base 11, a rotatable table 12 attached to the base 11, a saw assembly 20 including a motor 21, a blade 22 rotatable about axis A and driven by the motor 21, a cover housing 23 covering motor 21, an upper blade guard 24 covering the upper part of blade 22, and a lower guard 25 (shown in broken lines) pivotably attached to upper blade guard 24 for covering the lower part of blade 21. Accordingly, the saw assembly 20 is pivoted downwardly for cutting a workpiece disposed on the base 11 and table 12.

In addition, slide miter saws enable the user to move the saw assembly horizontally along the table. As shown in FIG. 2, most slide miter saws accomplish this by connecting the upper blade guard 24 (and thus the saw assembly 20) to a pivot arm, which in turn is connected to a trunnion 13, which is fixedly connected to at least one rail 14, which is slidably attached to a support housing 15 connected to the table 12 (see, e.g., US Patent No. 6,067,885). With such arrangement, the user would pull the saw assembly 20 forwardly, move the saw assembly 20 downwardly, then push the saw assembly 20 rearwardly for cutting the workpiece W.

This typical arrangement has been found to limit cutting capacity of the miter saw. This is because the cover housing 23 contacts the workpiece W, thus stopping the chopping movement. In particular, it has been found that the distance D1 between axis A and the bottom surface of cover housing 23 near upper blade guard 24 is equal to or larger than the distance D2 between axis A and the bottom surface of cover housing 23 at a point farther away from upper blade guard 24.

DE20200745U describes a miter saw comprising a handle having a longitudinal axis that is substantially parallel to the blade axis.

US5839339 describes a mitre saw having a base for supporting a workpiece. A mitre saw unit is described comprising a motor housing which accommodates a motor for driving a saw blade. The longitudinal axis of the motor and the motor housing is upwardly inclined relative to the saw blade by an angle of 45°, so that the motor housing extends obliquely upwardly relative to the mitre saw unit. A handle is integrally formed with the upper part of the motor housing and extends forwardly of the motor housing.

EP0407204 describes a mitre saw having a base on which a turntable is placed. A circular saw blade is mounted on a drive shaft, which is driven by an electric motor disposed in a motor housing. A control handle projects forwardly from the motor housing and is used both to operate the motor by trigger and also to downwardly pivot the saw blade.

According to the present invention, there is provided a miter saw comprising the features of claim 1. Further preferred embodiments are defined by dependent claims 2-8.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a front view of a prior art slide miter saw;
FIG. 2 is a top view of the prior art slide miter saw of FIG. 1;
FIG. 3 is a front view of a slide miter saw according to the invention;
FIG. 4 is a top view of the slide miter saw of FIG. 1; and
FIG. 5 is a partial cross-sectional view along line V-V of FIG. 4.

The invention is now described with reference to the accompanying figures, wherein like numerals designate like parts. Persons skilled in the art should understand that, while the invention is being explained in terms of a slide miter saw, the invention is also applicable to non-sliding miter saws.

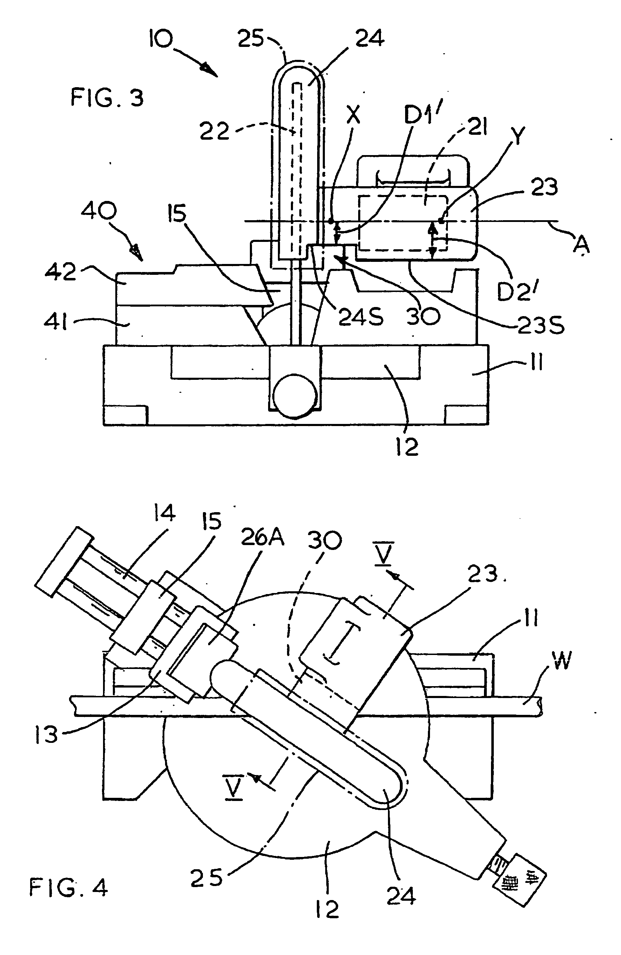

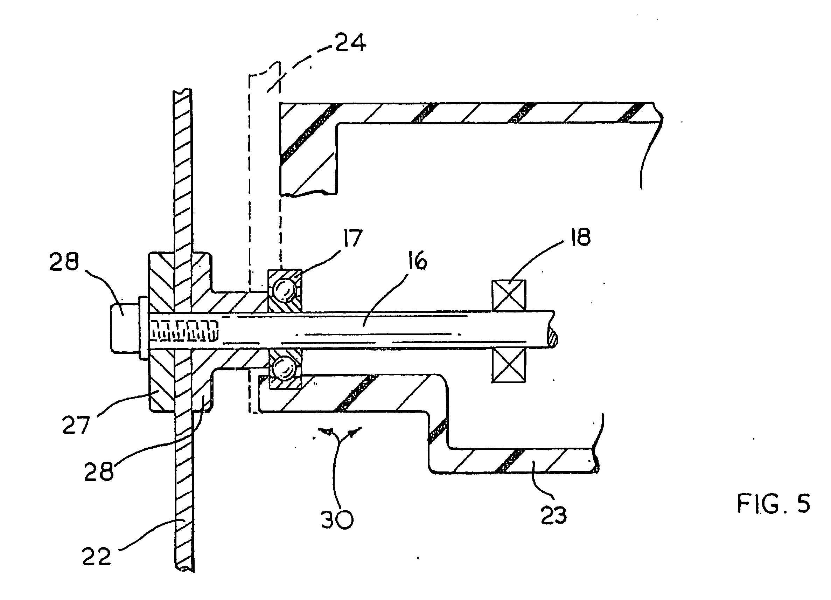

Referring to FIGS. 3-5, a slide miter saw 10 has a base 11, a table 12 rotatably connected to the base 11, preferably a support housing 15 pivotally connected to table 12, at least one (and preferably two) rail(s) 14 slidably connected to the support housing 15, a trunnion 13 attached to one end of the rail(s) 15, and a saw assembly 20 which comprises a pivot arm 26A pivotably attached to trunnion 13, a motor 21, a blade 22 rotatable about axis A and driven by the motor 21, an upper blade guard 24 for covering an upper part of blade 22, and a lower blade 25 pivotally attached to the upper blade guard 24 for covering a lower part of blade 22. Preferably the motor 21 is attached to the upper blade guard 17. These elements are well known in the art. Persons skilled in the art are referred to US Patent No. 6,067,885.

The slide miter saw 10 may also have a movable fence assembly 40 attached to the base 11. Movable fence assembly 40 preferably extends laterally across table 12, against which a workpiece can be positioned and supported for performing a cutting operation thereon. Movable fence assembly 40 may include a fixed fence 41 attached to base 11, and a movable fence 42 connected to the fixed fence 41. Preferably, movable fence 42 is slidably attached to fixed fence 41. Persons skilled in the art are referred to US Patent Nos. 5,297,463 and 5,943,931.

Motor 21 may be covered by a cover housing 23 attached to the upper blade guard 24. Cover housing 23 may cover motor 21 and/or any transmissions disposed between the motor 21 and blade 22. Cover housing 23 has a lower or bottom surface 23S, which is preferably below the axis A. Similarly, upper blade guard 24 has a lower or bottom surface 24S, which may be below axis A.

The blade 22 is mounted on a spindle 16, which extends into cover housing 23, and is driven by motor 21. Spindle 16 may be supported by bearings 17, 18. Blade 22 may be clamped unto spindle 16 via clamps 26, 27 disposed on both sides of blade 22, and held in place by a bolt 28, which is preferably threaded into spindle 16.

It is desirable to shape the volume underneath spindle 16 to maximize cutting capacity. Accordingly, a pocket 30 is created by manipulating the distances between axis A and bottom surfaces 23S and/or 24S. In particular, it is desirable to ensure that wherein the distance D1' between axis A and the bottom surface 23S and/or 24S at point X along axis A near the upper blade guard 24 is smaller than the distance D2' between axis A and the bottom surface 23S and/or 24S at point Y along axis A. Point Y is farther away from the upper blade guard 24 than point X. In addition, points X and Y are disposed along axis A on the same side of blade 22.

By manipulating distances in such manner, pocket 30 is created. Preferably, the height and width of pocket 30 is about 8.46cm (3.33 inches) and about 4.43cm (1.744 inches), respectively, for a miter saw that carries a blade with a diameter of about 21.59cm (8.5 inches). With such arrangement, a user could cut a 8.26cm (3 ¼") base molding placed vertically against fence assembly 40 at a miter angle of about 42° to about 48°. Such cut is achieved when the saw assembly 20 is placed near the fence and moved downwardly in a chopping action, rather than sliding it across the workpiece.

## Claims

1. A miter saw (10) comprising:
a base (11);
a table (12) rotatably attached to the base;
a saw assembly (20) connected to the table, the saw assembly comprising a motor (21), a blade (22) rotatable about a blade axis (A) and driven by the motor, a spindle (16) supporting the blade (22), an upper blade guard (24) for covering an upper part of the blade and having a bottom surface, and a housing (23) connected to the upper blade guard, the housing having a bottom surface (235) disposed below the axis, and a handle connected to the housing for moving the saw assembly;
wherein a first distance (D1') between the blade axis (A) and the bottom surface (245) of at least one of the housing and the upper blade guard at a first point (X) along the blade axis (A) near the upper blade guard is smaller than a second distance (D2') between the blade axis (A) and the bottom surface (235) of at least one of the housing and the upper blade guard at a second point along the blade axis (A), the second point being farther away from the upper blade guard than the first point (X) to form a pocket (30) underneath the spindle (16), **characterised in that** said first point (X) and said second point are both disposed within the spindle (16), , and that the handle has a longitudinal axis disposed substantially parallel to the blade axis, wherein a first part of the handle is disposed adjacent to said first point (X) and a second part of the handle is disposed adjacent to said second point.

2. A miter saw according to claim 1, wherein the blade has first and second sides, and the first and second points are disposed on the blade axis on the same side of the blade.

3. A miter saw according to claim 1 or 2, wherein the housing covers the motor.

4. A miter saw according to any one of the preceding claims, wherein the housing partly covers the spindle.

5. A miter saw according to any one of the preceding claims, wherein the saw assembly is connected to the table via a support housing (15) pivotally connected to the table.

6. A miter saw according to claim 5, further comprising at least one rail (14) slidably connected to the support housing.

7. A miter saw according to claim 6, further comprising a trunnion (13) fixedly attached on the at least one rail.

8. A miter saw of according to claim 7, wherein the saw assembly is pivotally connected to the trunnion.

## Patentansprüche

1. Gehrungssäge (10), die Folgendes umfasst:
einen Sockel (11);
einen drehbar an dem Sockel angebrachten Tisch (12);
eine mit dem Tisch verbundene Sägebaugruppe (20), wobei die Sägebaugruppe Folgendes umfasst: einen Motor (21), ein um eine Blattachse (A) drehbares und von dem Motor angetriebenes Blatt (22), eine das Blatt (22) tragende Spindel (16), einen oberen Blattschutz (24) zum Abdecken eines oberen Teils des Blatts mit einer unteren Oberfläche und ein mit dem oberen Blattschutz verbundenes Gehäuse (23), wobei das Gehäuse eine unterhalb von der Achse angeordnete untere Oberfläche (23S) und einen mit dem Gehäuse verbundenen Griff zum Verschieben der Sägebaugruppe aufweist;
wobei ein erster Abstand (D1') zwischen der Blattachse (A) und der unteren Oberfläche (24S) des Gehäuses und/oder des oberen Blattschutzes an einem ersten Punkt (X) entlang der Blattachse (A) in der Nähe des oberen Blattschutzes kleiner ist als ein zweiter Abstand (D2') zwischen der Blattachse (A) und der unteren Oberfläche (23S) des Gehäuses und/oder des oberen Blattschutzes an einem zweiten Punkt entlang der Blattachse (A), wobei der zweite Punkt weiter von dem oberen Blattschutz entfernt ist als der erste Punkt (X), um eine Tasche (30) unterhalb von der Spindel (16) zu bilden, **dadurch gekennzeichnet, dass** der erste Punkt (X) und der zweite Punkt beide innerhalb der Spindel (16) angeordnet sind und dass der Griff eine Längsachse aufweist, die im Wesentlichen parallel zu der Blattachse angeordnet ist, wobei ein erster Teil des Griffs benachbart zu dem ersten Punkt (X) angeordnet ist und ein zweiter Teil des Griffs benachbart zu dem zweiten Punkt angeordnet ist.

2. Gehrungssäge nach Anspruch 1, wobei das Blatt eine erste und eine zweite Seite aufweist und der erste und der zweite Punkt auf der selben Seite des Blatts auf der Blattachse angeordnet sind.

3. Gehrungssäge nach Anspruch 1 oder 2, wobei das Gehäuse den Motor abdeckt.

4. Gehrungssäge nach einem der vorangehenden Ansprüche, wobei das Gehäuse die Spindel teilweise abdeckt.

5. Gehrungssäge nach einem der vorangehenden Ansprüche, wobei die Sägebaugruppe über ein schwenkbar mit dem Tisch verbundenes Traggehäuse (15) mit dem Tisch verbunden ist.

6. Gehrungssäge nach Anspruch 5, weiter umfassend mindestens eine Schiene (14), die gleitfähig mit dem Traggehäuse verbunden ist.

7. Gehrungssäge nach Anspruch 6, weiter umfassend einen Lagerzapfen (13), der fest an der mindestens einen Schiene angebracht ist.

8. Gehrungssäge nach Anspruch 7, wobei die Sägebaugruppe schwenkbar mit dem Lagerzapfen verbunden ist.

## Revendications

1. Scie à onglet (10) comprenant :
une base (11) ;
une table (12) fixée à rotation à la base ;
un ensemble de scie (20) raccordé à la table, l'ensemble de scie comprenant un moteur (21), une lame (22) qui peut tourner autour d'un axe de lame (A) et est entraînée par le moteur, une broche (16) supportant la lame (22), un garde-lame supérieur (24) pour recouvrir une partie supérieure de la lame et ayant une surface inférieure, et un boîtier (23) raccordé au garde-lame supérieur, le boîtier ayant une surface de fond (235) disposée en dessous de l'axe, et une poignée raccordée au boîtier pour déplacer l'ensemble de scie ;
dans laquelle une première distance (D1' entre l'axe de lame (A) et la surface de fond (245) d'au moins un composant choisi parmi le boîtier et le garde-lame supérieur en un premier point (X) le long de l'axe (A) de la lame à proximité du garde-lame supérieur est plus petite qu'une seconde distance (D2') entre l'axe de lame (A) et la surface de fond (235) d'au moins un composant choisi parmi le boîtier et le garde-lame supérieur en un second point le long de l'axe (A) de la lame, le second point étant plus éloigné du garde-lame supérieur que le premier point (X) pour former une poche (30) en dessous de la broche (16), **caractérisée en ce que** ledit premier point (X) et ledit second point sont tous deux disposés à l'intérieur de la broche (16), et **en ce que** la poignée a un axe longitudinal disposé sensiblement parallèlement à l'axe de la lame, dans laquelle une première partie de la poignée est disposée adjacente audit premier point (X) et une seconde partie de la poignée est disposée adjacente audit second point.

2. Scie à onglet selon la revendication 1, dans laquelle la lame a un premier et un second côté, et les premier et second points sont disposés sur l'axe de la lame sur le même côté de celle-ci.

3. Scie à onglet selon la revendication 1 ou la revendication 2, dans laquelle le boîtier recouvre le moteur.

4. Scie à onglet selon l'une quelconque des revendications précédentes, dans laquelle le boîtier recouvre partiellement la broche.

5. Scie à onglet selon l'une quelconque des revendications précédentes, dans laquelle l'ensemble de scie est raccordé à la table via un boîtier de support (15) raccordé à pivotement à la table.

6. Scie à onglet selon la revendication 5, comprenant en outre au moins un rail (14) raccordé à coulissement au boîtier de support.

7. Scie à onglet selon la revendication 6, comprenant en outre un tourillon (13) monté fixe sur le au moins un rail.

8. Scie à onglet selon la revendication 7, dans laquelle l'ensemble de scie est raccordé à pivotement au tourillon.
